# EUROPEAN PATENT APPLICATION

(11) **EP 1 970 104 A1**
(43) Date of publication of application: **17.09.2008**
(21) Application number: 06834543.8
(22) Date of filing: 06.12.2006
(51) Int. Cl.: A63B 69/00, A63B 23/16, A63B 71/06, A63F 13/00

(54) **TRAINING METHOD, TRAINING DEVICE, AND COORDINATION TRAINING METHOD**

(30) Priority: 12.12.2005 JP 2005357666; 26.05.2006 JP 2006147462; 31.10.2006 JP 2006297185
(71) Applicant: SSD Company Limited, Kusatsu-shi, Shiga 525-0054 (JP)
(72) Inventor: UESHIMA, Hiromu, Kusatsu-shi, Shiga 5250054 (JP); FUKUDOME, Kei, Kusatsu-shi, Shiga 5250054 (JP)
(74) Representative: Desrois, Julie
(86) International application number: PCT/JP2006/324788
(87) International publication number: WO 2007/069618

(57) **Abstract**

The guide objects 40L and 40R instruct the movements of the respective left and right hands. The image sensor 54 captures images of the input instruments 3L and 3R which are worn on left and right hands respectively and the cursors 70L and 70R are connected with the movements of the input instruments 3L and 3R by processing the result of the imaging. A series of the processing and transmission of information in the order of the eyes, the visual nerve, the brain, the motor nerve, and the hands and arms are performed inside of a human body, which are not performed in a normal life, by making the operator perform the independent motions of the respective left and right hands, which are not performed in a normal life.

## Description

### Technical Field

The present invention relates to a training method and the related arts for improving coordination ability of a human.

### Background Art

The patent document (Jpn. unexamined patent publication No. 2004-216083) discloses the game machine of tracking a real image while viewing an image projected on a mirror (a virtual image) effective for preventing aging or for rehabilitation by activating a brain function or the like to improve ability to think, concentration and reflex nerves.

Paper or the like (real image) with a graphic drawn thereon is placed on the base of the game machine and a mirror is disposed at a right angle to the real image, so that a person who plays a game traces the real image while viewing the mirror and competes in exactness and speediness of the drawn graphic. The game machine is explained from another viewpoint below.

In general, when Human draws graphic, the human looks see from front to back and from side to side of the real image. Then the visual information is transmitted to the brain and hereby it is possible to move his or her hand naturally. In the game machine, since the real image is traced while viewing the virtual image the front-and-rear and left-and-right of which is inverse to the real image, he or she has to inversely move the hand against order from the brain. Therefore, it is difficult to move the hand to one's satisfaction. The competition of the graphics drawing against the natural action is performed.

In this way, the game machine requires the human to move the hand along the real image while viewing the virtual image, i.e. requires the human to move the hand along the real image which is invisible with reference to the virtual image which is visible instead of viewing the real image. The brain function is activated by this configuration.

It is an object of the present invention to provide a training method and the related techniques thereof capable of improving exactness and speediness of the transmission of an instruction when the relevant part of the body performs through a motor nerve the motion instructed by the information which is recognized through sensory nerves.

### Disclosure of Invention

In accordance with a first aspect of the present invention, a training method comprises the steps of: displaying a plurality of paths which is individually assigned to respective parts of a human body, a plurality of guide objects which corresponds to said plurality of paths, and a plurality of cursors which corresponds to the respective parts of the human body; moving said respective guide object along said corresponding paths in directions which are individually assigned to said respective guide objects; capturing images of the parts of the human body; detecting motions of the respective parts of the human body on the basis of the images acquired by capturing; and moving said cursors in response to the detected motions of the corresponding parts of the human body.

In accordance with this configuration, the each guide object moves to the direction specified independently to each guide object on the each path assigned independently to each part of the body, and thereby the instruction of moving in accordance with them is given to the operator. Therefore a series of the processing and transmission of information in the order of a sensory organ, a sensory nerve, a brain, a motor nerve, and a part of the body are performed inside of a human body, which are not performed in a normal life, by making the operator perform the independent motions of the respective parts of the body, which are not performed in a normal life. As the result, the contribution to improvement of dexterity performance of human is anticipated. In addition, when the movement instructed by the information which is recognized through the sensory nerve is performed by the each part of the body through the motor nerve, the contribution to improvement of exactness and speediness of the transmission of the instruction is anticipated.

In other words, it is anticipated that the present invention can contribute to improvement of a coordination ability of human. Referring to the document (Akito Azumane and Keiji Miyashita, "Motto motto undonoryoku ga tsuku mahou no houhou", SHUFU-TO-SEIKATSUSHA LTD., November 15, 2004), the coordination ability is defined as an ability to smoothly perform processes of a series of movements where a human detects situation using the five senses, determines it using a brain, and moves muscle specifically. Accordingly, the training method of the present invention may be referred as the coordination training method.

More specifically, referring to this document, the coordination ability includes a rhythm ability, a balance ability, a switch-over ability, a reaction ability, a coupling ability, an orientation ability, and a differentiation ability. The rhythm ability means an ability to represent rhythm of the movement based on visual information, acoustic information, and /or information imaged by a person with a body. The balance ability means an ability to maintain the proper balance and recover the deformed posture. The switch-over ability means an ability to quickly switch over movement in response to the change of condition. The reaction ability means an ability to quickly react to a signal to deal appropriately. The coupling ability means an ability to smoothly move an entire body, i.e., an ability to adjust a force and a speed to laconically move a muscle and a joint of the partial body. The orientation ability means an ability to comprehend a positional relation between the moving object and one's own body. The differentiation ability means an ability to link hands and/or feet and/or instruments with a visual input to precisely operate them (the hand-eye coordinaton (coordination between hand and eye), the foot-eye coordinaton (coordination between foot and eye)). The hand-eye coordination may be referred as the eye-hand coordination. Also, the foot-eye coordination may be referred as the eye-foot coordination. Especially, it is expected that the present invention can contribute to improvement of the differentiation ability (the hand-eye coordination).

In the above training method, in said step of moving along said paths, said each guide object moves in synchronism with music.

In accordance with this configuration, the operator can move in accordance with the music and thereby the operator is supported to move in accordance with movement instructions by the guide objects.

In the above training method, said plurality of paths includes two different paths at least.

In accordance with this configuration, the difficulty of movements instructed by the guide objects can be raised.

In the above training method, each of said two different paths loops and said two guide objects corresponding to said two paths move clockwise and counterclockwise respectively.

In accordance with this configuration, the difficulty of movements instructed by the guide objects can be more raised.

In the above training method, each of said two different paths loops and said two guide objects corresponding to said two paths move in the same direction which is any one of clockwise and counterclockwise.

In accordance with this configuration, the difficulty of instructed movements can be reduced in comparison with the case where the guide objects moves to the different directions.

In the above training method, said two guide objects corresponding to said two different paths move at different speeds each other.

In accordance with this configuration, the difficulty of movements instructed by the guide objects can be further more raised.

In the above training method, said plurality of paths includes the two same paths at least.

In accordance with this configuration, the difficulty of instructed movements can be reduced in comparison with the case where the paths are different from one another.

In the above training method, each of said two same paths loops and said two guide objects corresponding to said two paths move clockwise and counterclockwise respectively.

In accordance with this configuration, the difficulty of movements instructed by the guide objects can be more raised.

In the above training method, each of said two same paths loops and said two guide objects corresponding to said two paths move in the same direction which is any one of clockwise and counterclockwise.

In accordance with this configuration, the difficulty of instructed movements can be reduced in comparison with the case where the guide objects moves to the different directions.

In the above training method, said two guide objects corresponding to said two same paths move at different speeds each other.

In accordance with this configuration, the difficulty of movements instructed by the guide objects can be further more raised.

In the above training method, each of said paths is provided with a single segment or a plurality of segments.

In accordance with this configuration, the various processes (e.g., movement control of the guide object, display control of the assistant object to be described below, and so on) can be performed as a unit the segment.

The above training method further comprises: displaying an assistant object at an end of said segment in timing when said guide object reaches the end of said segment.

In accordance with this configuration, the operator is supported to move in accordance with a movement instruction by the guide object by viewing the assistant object.

The above training method further comprises: changing a moving direction of said guide object and/or said path thereof.

In accordance with this configuration, since various movement instructions are given, the contribution to improvement of dexterity performance of a human and the contribution to improvement of exactness and speediness of the transmission of an instruction in the case where the relevant part of the body performs through a motor nerve the motion instructed by the information which is recognized through a sensory nerve are more anticipated.

The above training method further comprises: determining whether or not said cursor moves along a movement of said corresponding guide object.

In accordance with this configuration, the operator can objectively recognize whether or not he or she has performed the motion in accordance with the guide object.

In the above training method, in said step of capturing, retroreflective members are captured, which are worn or grasped in the respective parts of the human body, wherein said training method further comprises: emitting light intermittently to said retroreflective members which are worn or grasped in the respective parts.

In accordance with this configuration, it is possible to detect a motion of each part of a body even in simplified processing and simplified constitution.

In the above training method, in said step of capturing, light-emitting devices are captured, which are worn or grasped in the respective parts of the human body.

In accordance with this configuration, it is possible to detect a motion of each part of a body even in simplified processing and simplified constitution.

In the above training method, the parts of the human body are both hands.

In the above training method, in said step of moving along said paths, when said cursor overlaps with said corresponding guide object, said guide object starts moving.

In accordance with this configuration, the difficulty of instructed movements can be reduced in comparison with the case where the operator follows the guide object which moves sustainably.

In accordance with a second aspect of the present invention, a training method comprises the steps of : displaying a plurality of guide objects which corresponds to a plurality of parts of a human body and a plurality of cursors which corresponds to the plurality of parts of the human body; moving said respective guide object in accordance with paths which are individually assigned to said respective guide objects; detecting motions of the respective parts of the human body; and moving said cursors in response to the detected motions of the corresponding parts of the human body.

In accordance with a third aspect of the present invention, a training method comprises: issuing movement instructions which are individually assigned to respective parts of a human body via a display device, wherein the each movement instruction for the each part of the human body includes a content which instructs in realtime so as to move simultaneously and sustainably the each part of the human body.

In accordance with a fourth aspect of the present invention, a training apparatus comprises: a plurality of input instruments which correspond to a plurality of part of a human body; a display control unit operable to display a plurality of paths which is individually assigned to the respective parts of the human body, a plurality of guide objects which corresponds to said plurality of paths, and a plurality of cursors which corresponds to the respective parts of the human body; a first movement control unit operable to move said respective guide object along said corresponding paths in directions which are individually assigned to said respective guide objects; an imaging unit operable to capture images of the plurality of input instruments which are worn or grasped in the plurality of parts of the human body; a detection unit operable to detect motions of the plurality of input instruments on the basis of the images acquired by capturing; and a second movement control unit operable to move said cursors in response to the detected motions of the corresponding input instruments.

In the above training apparatus, said input instrument includes a weight of predetermined weight in order that the human can move the part of the human body in loaded condition.

In accordance with this configuration, since it is exercise for the operator to move each part of a body in accordance with the guide objects, it can contribute to the promotion of health in addition to the above effects.

In accordance with a fifth aspect of the present invention, a coordination training method comprises the steps of: outputting a predetermined subject as an image to a display device and/or as voice to an audio output device; capturing images of a plurality of parts of a human body; detecting motions of the respective parts of the human body on the basis of the images acquired by capturing; and performing evaluation on the basis of detected results of the respective parts of the human body and said predetermined subject, wherein said predetermined subject includes a subject for training an arbitrary combination or any one of an orientation ability, a switch-over ability, a rhythm ability, a reaction ability, a balance ability, a coupling ability, and a differentiation ability of a human by cooperation with the each part of the human body.

In this coordination training method further comprises: displaying a plurality of cursors which corresponds to the respective parts of the human body.

### Brief Description of Drawings

The novel features of the invention are set forth in the appended claims. The invention itself, however, as well as other features and advantages thereof, will be best understood by reading the detailed description of specific embodiments in conjunction with the accompanying drawings.
Fig. 1 is a block diagram showing the entire configuration of a training system in accordance with an embodiment of the present invention.
Fig. 2 is a perspective view of one of the input instruments 3L and 3R of Fig. 1.
Fig. 3 is a view showing a condition of the input instruments 3L and 3R of Fig. 1 which are worn on left and right hands respectively.
Fig. 4 is a view showing an example of a change with time of a training screen on the basis of the training system of Fig. 1.
Fig. 5 is a view showing examples of path objects which are displayed on training screens by the training system of Fig. 1.
Fig. 6 is a view showing examples of training screens on the basis of the training system of Fig. 1.
Fig. 7 is a schematic diagram showing the electric configuration of the information processing apparatus 1 of Fig. 1.
Fig. 8 is a transition diagram showing a training process flow which is executed by the multimedia processor 50 of Fig. 7.
Fig. 9 is a flowchart showing the overall process flow which is executed by the multimedia processor 50 of Fig. 7.
Fig. 10 is a flowchart showing the imaging process which is one of the processes of the application program of step S13 of Fig. 9.
Fig. 11 is a flowchart showing the sheet detecting process which is the other one of the processes of the application program of step S13 of Fig. 9.
Fig. 12 is an explanatory view for showing the method of extracting a target point of the each retroreflective sheet 15L and 15R from a differential image DI.
Fig. 13 is a flowchart showing the overlap determining process which is executed during of the process of the stage "n" of step S3-n of Fig. 8.
Fig. 14 (a) is a view showing an example of a path table which is referred when displaying the path objects and the guide objects. Fig. 14 (b) is a view showing an example of a velocity table which is referred when displaying the guide objects.
Fig. 15 is a flowchart showing the video controlling process (the state indicates "playing") which is the further other one of the processes of the application program of step S13 of Fig. 9.
Fig. 16 is a flowchart showing the video controlling process (the state indicates "cleared") which is the further other one of the processes of the application program of step S13 of Fig. 9.
Fig. 17 is a view showing other example of a input instrument which is available for the training system of Fig. 1.
Fig. 18 is a view showing other examples of training screens on the basis of the training system of Fig. 1.
Fig. 19 is a view showing the other example of the method of wearing the input instruments 3 of Fig. 1.
Fig. 20 is a view showing the further other example of the method of wearing the input instruments 3 of Fig. 1.
Fig. 21 is a view showing the modification example of the moving way of the guide objects on the basis of the training system of Fig. 1.
Fig. 22 is a flowchart showing the overlap determining process which is executed in the modification example.

### Best Mode for Carrying Out the Invention

In what follows, an embodiment of the present invention will be explained in conjunction with the accompanying drawings. Meanwhile, like references indicate the same or functionally similar elements throughout the respective drawings, and therefore redundant explanation is not repeated.

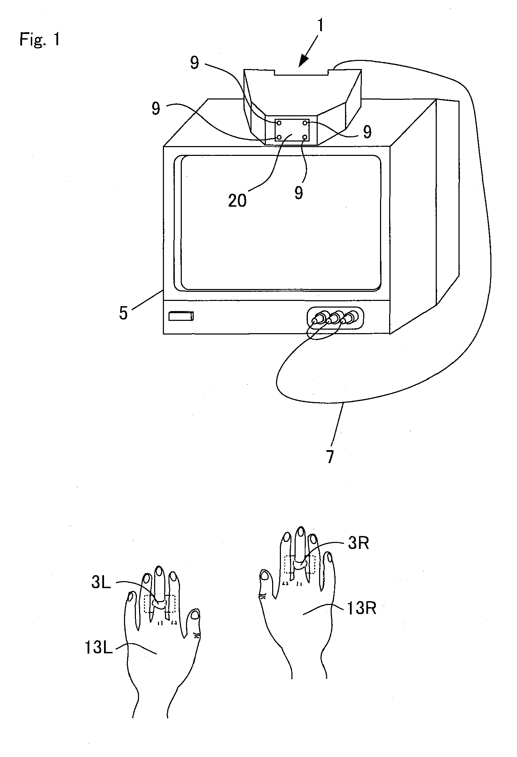

Fig. 1 is a block diagram showing the entire configuration of a training system in accordance with an embodiment of the present invention. As shown in Fig. 1, the training system is provided with an information processing apparatus 1, input instruments 3L and 3R, and television monitor 5. In what follows, the input instruments 3L and 3R are generally referred to as the "input instruments 3" in the case where they need not be distinguished.

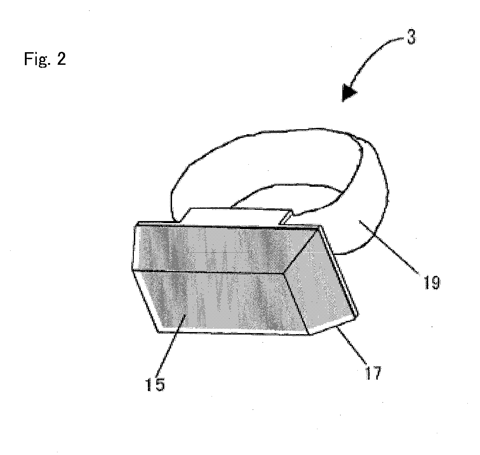

Fig. 2 is a perspective view of the input instrument 3 of Fig. 1. As shown in Fig. 2, the input instrument 3 comprises a transparent member 17 and a belt 19 which is passed through a passage formed along the bottom face of the transparent member 17 and fixed at the inside of the transparent member 17. The transparent member 17 is provided with a retroreflective sheet 15 covering the entirety of the inside of the transparent member 17 (except for the bottom side). The usage of the input instrument 3 will be described later.

In this description, in the case where it is necessary to distinguish between the input instruments 3L and 3R, the transparent member17 and the retroreflective sheet 15 of the input instrument 3L are respectively referred to as the transparent member 17L and the retroreflective sheet 15L, and the transparent member 17 and the retroreflective sheet 15 of the input instrument 3R are respectively referred to as the transparent member 17R and the retroreflective sheet 15R.

Returning to Fig. 1, the information processing apparatus 1 is connected to the television monitor 5 by an AV cable 7. Furthermore, although not shown in the figure, the information processing apparatus 1 is supplied with a power supply voltage from an AC adapter or a battery. A power switch (not shown in the figure) is provided in the back face of the information processing apparatus 1.

The information processing apparatus 1 is provided with an infrared filter 20 which is located in the front side of the information processing apparatus 1 and serves to transmit only infrared light, and there are four infrared light emitting diodes 9 which are located around the infrared filter 20 and serve to emit infrared light. An image sensor 54 to be described below is located behind the infrared filter 20.

The four infrared light emitting diodes 9 intermittently emit infrared light. Then, the infrared light emitted from the infrared light emitting diodes 9 is reflected by the retroreflective sheets 15 attached to the input instruments 3, and input to the image sensor 54 located behind the infrared filter 20. Images of the input instruments 3 can be captured by the image sensor 54 in this way.

While infrared light is intermittently emitted, the imaging process of the image sensor 54 is performed even in non-emission periods of infrared light. The information processing apparatus 1 calculates the difference between the image captured with infrared light illumination and the image captured without infrared light illumination when a player moves the input instruments 3, and calculates the location and the like of the input instruments 3 (that is, the retroreflective sheets 15) on the basis of this differential signal "DI" (differential image "DI").

It is possible to eliminate, as much as possible, noise of light other than the light reflected from the retroreflective sheets 15 by obtaining the difference so that the retroreflective sheets 15 can be detected with a high degree of accuracy. Meanwhile, the generation process of the differential image "DI" on the basis of stroboscopic imaging is not necessarily the essential constituent element.

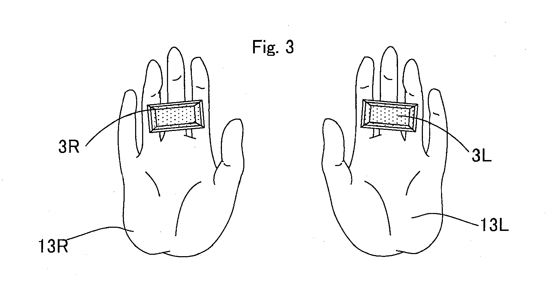

Fig. 3 is an explanatory view for showing an exemplary usage of the input instruments 3L and 3R of Fig. 1.

As illustrated in Fig. 1 and Fig. 3, an operator inserts his or her middle fingers through the belts 19 and whereby wears the input instruments 3. As shown in Fig. 1, if the operator opens the hands facing the information processing apparatus 1, i.e., the image sensor 54, the transparent members 17, i.e., the retroreflective sheets 15 are exposed, and then images thereof can be captured. On the other hand, if the operator grips the transparent members 17, the transparent members 17, i.e., the retroreflective sheets 15 are hidden in the hands so that images thereof are not captured by the image sensor 54.

In the case of the present embodiment, the operator moves the hands while opening the hands facing the image sensor 54. Then, the retroreflective sheets 15 are captured by the image sensor 54 and thereby the motions of the hands can be detected. As described hereinbelow, the detected result is used for the training. Meanwhile, the operator may or may not have the image sensor 54 capture images of the retroreflective sheets 15 by the action of opening or closing hands in order to give an input/no-input to the information processing apparatus 1.

Next, the processing of the multimedia processor 50 to be described below is explained, while referring to several examples of the training screen on the basis of the training system in accordance with the present embodiment.

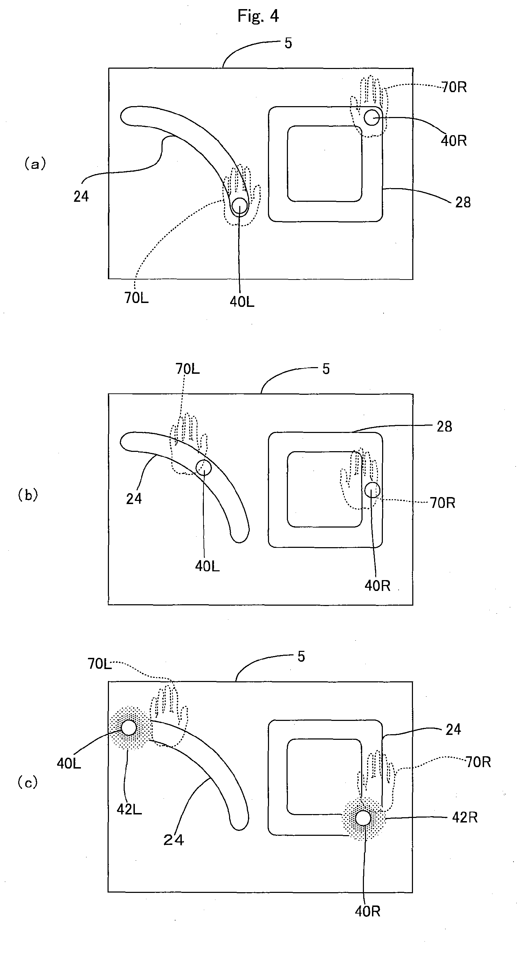

Fig. 4 is a view showing an example of a change with time of a training screen on the basis of the training system of Fig. 1. Referring to Fig. 4, the multimedia processor 50 displays a training screen which includes a path object 24 in a left area and a path object 28 in a right area of the television monitor 5. The left area of the training screen is assigned to the left hand and the right area is assigned to the right hand.

The multimedia processor 50 displays cursors 70L and 70R on the television monitor 5. The multimedia processor 50 moves cursor 70L in synchronism with motion of the retroreflective sheet 15L captured by the image sensor 54 and moves cursor 70R in synchronism with motion of the retroreflective sheet 15R captured by the image sensor 54. The transparency (except for an outline) or translucence is suitable as the color of the cursor 70L and 70R. Because the operator can view a guide object even if the cursor overlaps with the guide object and thereby concentrate on the training.

Referring to Fig. 4(a), the state of the training screen represents the state at a time of start. The multimedia processor 50 displays the guide object 40L corresponding to the left hand at the lower end of the path object 24 and displays the guide object 40R corresponding to the right hand at the upper right corner of the path object 28 at the time of start.

Then, the multimedia processor 50 moves the guide object 41L and 41R along the path object 24 and 28 in accordance with music (e.g., tempo, beat, and time, rhythm, melody, or the like). In this case, the starts are simultaneous. In the example of Fig.4, the guide object 40L reciprocates on the path object 24 and the guide object 40R moves clockwise on the path object 28.

In what follows, the guide objects 40L and 40R are generally referred to as the "guide objects 40" in the case where they need not be distinguished.

The further advanced state of the guide objects 40L and 40R from the state of Fig. 4(a) is represented by Fig. 4(b). The operator unclenches the respective left and right hands in which the input instruments 3L and 3R are worn, and moves the respective left and right hands in accordance with the movements of the guide objects 40L and 40R while directing them at the information processing apparatus 1. In other words, the operator moves the respective left and right hands and tries to keep the cursors 70L and 70R in association with the hands overlapping with the guide objects 40L and 40R respectively. In further other words, the operator moves the respective left and right hands and tries to keep the cursors 70L and 70R moving similarly to the guide objects 40L and 40R at the same positions as the guide objects 40L and 40R.

The operator can predict how the guide objects 40L and 40R will move from the present positions (i.e., the movement direction) by the shapes of the path objects 24 and 28. In addition, since the guide objects 40L and 40R move in synchronism with music, the operator can recognize the moving velocity of the guide objects40L and 40R by hearing the music. These techniques support the operator that tries to keep the cursors 70L and 70R overlapping with the moving guide objects 40L and 40R.

The further advanced state of the guide objects 40L and 40R from the state of Fig. 4 (b) is represented by Fig. 4 (c) . When the guide object 40L reaches any one of the ends of the path object 24, an assistant object 42L is displayed on the such end and cleared immediately (instantaneous display). In the similar way, When the guide object 40R reaches any one of the corners of the path object 28, an assistant object 42R is displayed on the such corner and cleared immediately (instantaneous display).

In what follows, the assistant objects 42L and 42R are generally referred to as the "assistant objects 42" in the case where they need not be distinguished.

The meaning of a segment is defined. The segment means each of elements constituting one path object. The path object 24 is provided with one segment. In other words, the entirety of the path object 24 consists of a single segment. The path object 28 is provided with four segments. In other words, each of the sides of the path object 28 consists of one segment.

The multimedia processor 50 controls movements of the respective guide objects so that time periods when the guide objects move from one ends to the other ends of the segments are equal to each other. Consequently, the time period when the guide object 40L moves from one end to the other end of the path object 24 is equal to the time period when the guide object 40R moves from one end to the other end of one side of the path object 28. Moreover, the guide objects simultaneously starts moving from the ends of the segments as the starting points. Namely, as shown in Fig. 4(a), the guide object 40L and the guide object 40R simultaneously start movements from the end of the path object 24 as the starting point and from the upper right corner of the path object 28 as the starting point respectively.

Consequently, the assistant object 42L and the assistant object 42R are displayed and cleared at the same timing. Then, since the guide objects 40L and 40R moves in synchronism with the music, the interval of display of each assistant object 42L and 42R correspond to the music. As the result, the assistant object 42L and 42R also serves to support the operator that tries to keep the cursors 70L and 70R overlapping with the moving guide objects 40L and 40R.

By the way, when the operator performs motions corresponding to the guide objects 40L and 40R at the same time in the right and left by the prescribed number Ns of the segments, i.e., the cursors 70L and 70R are moved simultaneously by the prescribed number Ns of the segments while overlapping with the guide objects 40L and 40R, the multimedia processor 50 displays the character of "good" on the training screen. Meanwhile, Determination for displaying the character of "good" may be executed on the left and the right individually.

When the character of "good" is displayed by the prescribed number of times Ng, i.e., the cursors 70L and 70R are moved by the prescribed number Ns of the segments multiplied by the prescribed number of times Ng while overlapping with the guide objects 40L and 40R, the multimedia processor 50 determines that the operator has cleared the relevant training screen, then terminates the training screen, and further then displays the next different training screen. The other examples of training screens are described hereinafter. Meanwhile, when a training screen is not cleared even when the prescribed time elapses, the multimedia processor 50 terminates the process of displaying the training screen.

Next, prospective effects which is caused by the training system of the present embodiment are described. Information captured by the eyes is transmitted to the brain through a visual nerve. Then, when a part of a body is moved, a brain transmits an instruction to the part through a motor nerve and thereby the relevant part is moved.

Consequently, a series of the processing and transmission of information in the order of eyes, a visual nerve, a brain, a motor nerve, and hands and arms are performed inside of a human body, which are not performed in normal life, by making the operator perform the independent motion to each left and right hand, which are not performed in normal life. As the result, it is anticipated that the training system of the present embodiment can contribute to improvement of dexterity performance of human. In addition, when the movement instructed by the information which is recognized through the visual nerve is performed by the hands and arms through the motor nerve, the contribution to improvement of exactness and speediness of the transmission of an instruction is anticipated.

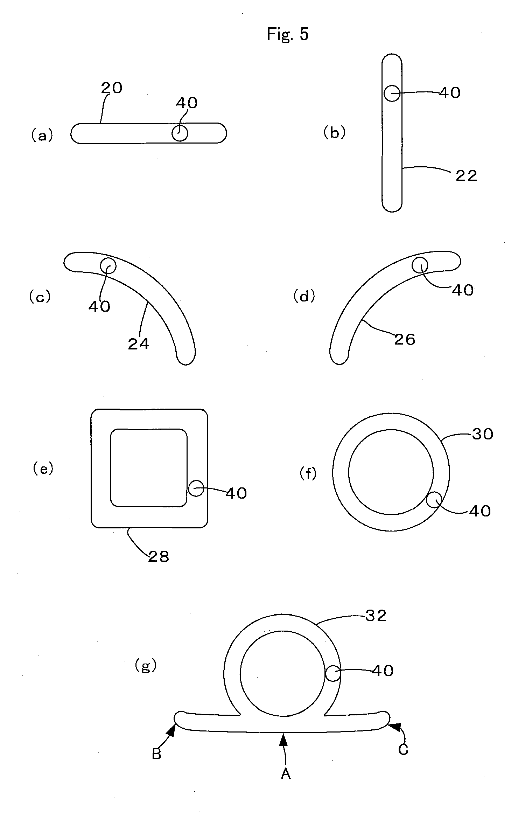

Fig. 5 is a view showing examples of path objects which are displayed on training screens by the training system of Fig. 1. In the embodiment, a training screen is constituted by combining any two of the path objects 20, 22, 24, 26, 28, 30 and 32 shown in Fig. 5 (a) to 5(g). The combination may be the combination of the same path objects or may also be the combination of the different path objects. Then, the direction of the movement of the guide object 40 in each path object 28 and 30 may be arbitrarily selected such as clockwise and counterclockwise. Furthermore, the starting point of each guide object 40 may be arbitrarily also selected if it is the end of the segment.

Each of the path objects 20 to 26 shown in Fig. 5(a) to Fig. 5(d) consists of the single segment. The path object 28 shown in Fig. 5(e) consists of four segments. In this case, one side corresponds to one segment. The path object 30 shown in Fig. 5 (f) consists of two segments. In case where it is assumed that the circular path object 30 is vertically divided into two pieces, each half circle corresponds to one segment. The path object 32 shown in Fig. 5(g) consists of tree segments. A part from the center of the bottom (an arrow A) of the path object 32 to the same position (the arrow A) clockwise or counterclockwise corresponds to one segment. Then, a part from the center of the bottom (the arrow A) of the path object 32 to the right end (an arrow C) of the bottom and further from the right end (the arrow C) to the center of the bottom (the arrow A) corresponds to one segment. Further then, a part from the center of the bottom (the arrow A) of the path object 32 to the left end (an arrow B) of the bottom and further from the left end (the arrow B) to the center of the bottom (the arrow A) corresponds to one segment.

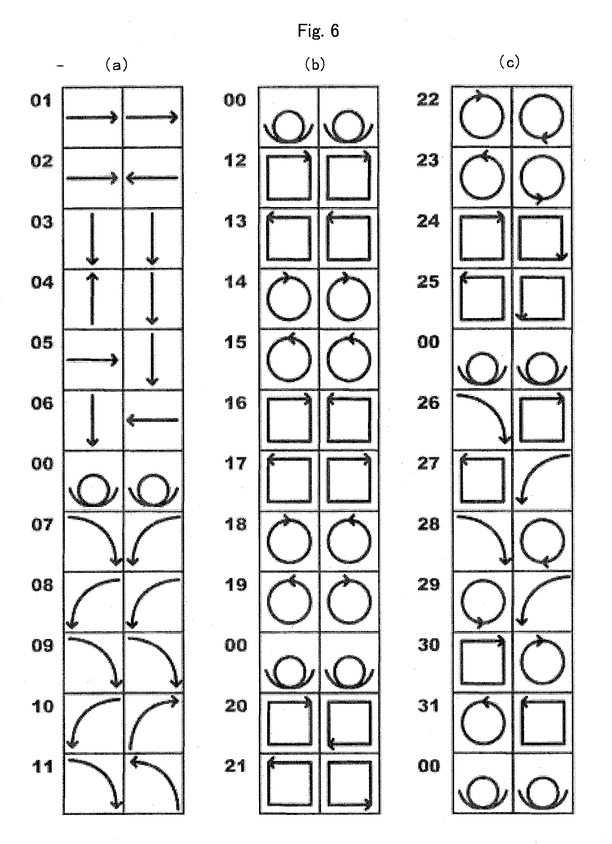

Fig. 6 is a view showing examples of training screens on the basis of the training system of Fig. 1. Referring to Fig.6, in the present embodiment, the zeroth training screen to the thirty-first training screen are provided.

In Fig. 6, a left area of each training screen represents a path object for the left hand and a right area thereof represents a path object for the right hand. Then, a head of an arrow designates a starting point of a guide object and a direction thereof designates a moving direction of the guide object. For an example, in the thirtieth training screen of Fig 6(c), the path object 28 of Fig. 5(e) is left-hand and the path object 30 of Fig. 5(f) is right-hand. Then, the starting point of the guide object in the left-hand path object28 is the upper right corner and the moving direction thereof is clockwise. Further then, the starting point of the guide object in the right-hand path object30 is the top of the circular path object 30 and the moving direction thereof is clockwise.

In Fig. 6, a arrow is not drawn in the path object 32 of Fig. 5(g) and therefore the explanation is added. In the path object 32, the guide object 40 starts moving from the left end (the arrow B) of the bottom, then passes through the center (the arrow A) of the bottom, further then circles counterclockwise the circular part, passes through the center (the arrow A) of the bottom again, and further moves to the right end (the arrow C) of the bottom. Then, the guide object 40 passes through the center (the arrow A) of the bottom from the right end (the arrow C) of the bottom, circles clockwise the circular part, passes through the center (the arrow A) of the bottom again, and then reaches the left end (the arrow B) of the bottom. The assistant object 42 is displayed in timing when the guide object 40 reaches the center (the arrow A) of the bottom.

The training screens are progressed from the first training screen to the thirty-first training screen in series by the multimedia processor 50. However, it is conditioned that the operator clears each training screen. Further however, as shown in Fig. 6, the zeroth training screen is provided and is inserted between the other training screens.

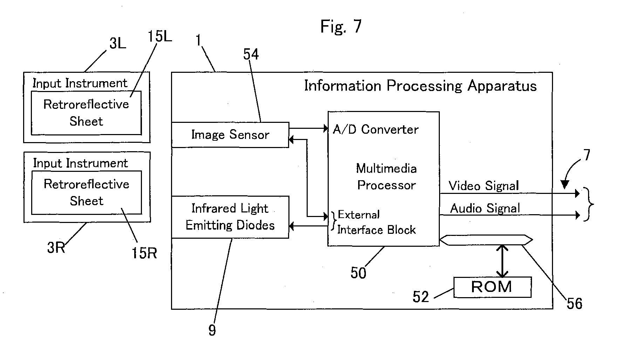

Fig. 7 is a schematic diagram showing the electric configuration of the information processing apparatus 1 of Fig. 1. As shown in Fig. 7, the information processing apparatus 1 includes the multimedia processor 50, an image sensor 54, infrared light emitting diodes 9, a ROM (read only memory) 52 and a bus 56.

The multimedia processor 50 can access the ROM 52 through the bus 56. Accordingly, the multimedia processor 50 can perform programs stored in the ROM 52, and read and process the data stored in the ROM 52. The programs for executing the processes of control of the training screen, detection of positions of the retroreflective sheets 15L and 15R and the like, image data, sound data and the like are written to in this ROM 52 in advance.

Although not shown in the figure, this multimedia processor is provided with a central processing unit (referred to as the "CPU" in the following description), a graphics processing unit (referred to as the "GPU" in the following description), a sound processing unit (referred to as the "SPU" in the following description), a geometry engine (referred to as the "GE" in the following description), an external interface block, a main RAM, and an A/D converter (referred to as the "ADC" in the following description) and so forth.

The CPU performs various operations and controls the overall system in accordance with the programs stored in the ROM 52. The CPU performs the process relating to graphics operations, which are performed by running the program stored in the ROM 52, such as the calculation of the parameters required for the expansion, reduction, rotation and/or parallel displacement of the respective objects and sprites and the calculation of eye coordinates (camera coordinates) and view vector. In this description, the term "object" is used to indicate a unit which is composed of one or more polygons or sprites and to which expansion, reduction, rotation and parallel displacement transformations are applied in an integral manner.

The GPU serves to generate a three-dimensional image composed of polygons and sprites on a real time base, and converts it into an analog composite video signal. The SPU generates PCM (pulse code modulation) wave data, amplitude data, and main volume data, and generates analog audio signals from them by analog multiplication. The GE performs geometry operations for displaying a three-dimensional image. Specifically, the GE executes arithmetic operations such as matrix multiplications , vector affine transformations, vector orthogonal transformations, perspective projection transformations, the calculations of vertex brightnesses / polygon brightnesses (vector inner products), and polygon back face culling processes (vector cross products).

The external interface block is an interface with peripheral devices (the image sensor 54 and the infrared light emitting diodes 9 in the case of the present embodiment) and includes programmable digital input/output (I/O) ports of 24 channels. The ADC is connected to analog input ports of 4 channels and serves to convert an analog signal, which is input from an analog input device (the image sensor 54 in the case of the present embodiment) through the analog input port, into a digital signal. The main RAM is used by the CPU as a work area, a variable storing area, a virtual memory system management area and so forth.

The input instruments 3L and 3R are illuminated with the infrared light which is emitted from the infrared light emitting diodes 9, and then the illuminating infrared light is reflected by the retroreflective sheets 15L and 15R. The image sensor 54 receives the reflected light from this retroreflective sheets 15L and 15R for capturing images, and outputs an image signal which includes images of the retroreflective sheets 15L and 15R. As described above, the multimedia processor 50 has the infrared light emitting diodes 9 intermittently flash for performing stroboscopic imaging, and thereby an image signal which is obtained without infrared light illumination is also output. These analog image signals output from the image sensor 54 are converted into digital data by an ADC incorporated in the multimedia processor 50.

The multimedia processor 50 generates the differential signal "DI" (differential image "DI") as described above from the digital image signals input from the image sensor 54 through the ADC. On the basis of the differential signal "DI", the multimedia processor 50 determines whether or not there is an input from the input instruments 3 and computes the positions and so forth of the input instruments 3, performs an operation, a graphics process, a sound process and the like, and outputs a video signal and audio signals. The video signal and the audio signals are supplied to the television monitor 5 through the AV cable 7 in order to display an image corresponding to the video signal on the television monitor 5 and output sounds corresponding to the audio signals from the speaker thereof (not shown in the figure).

As described above, the multimedia processor 50 controls movements of the cursors 70L and 70R in accordance with positions of the input instruments 3L and 3R detected thereby. In other words, the multimedia processor 50 extracts images of the retroreflective sheets 15L and 15R from the differential image DI and then calculates coordinates of respective target points on the differential image DI. Then, the multimedia processor 50 converts the coordinates of the two target points on the differential image DI into screen coordinates and thereby obtains positions of two target points on a screen of the television monitor 5. The multimedia processor 50 displays the cursors 70L and 70R at the positions of the two target points (corresponding to the retroreflective sheets 15L and 15R) on the screen. Meanwhile, a screen coordinate system is defined as a coordinate system which is used when an image is displayed on the television monitor 5.

Next, the processes performed by the multimedia processor 50 in accordance with the programs stored in the ROM 52 will be explained with reference to a flow chart.

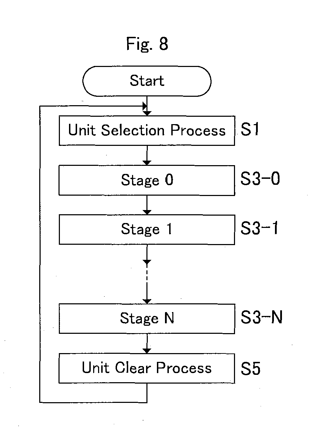

Fig. 8 is a transition diagram showing a training process flow which is executed by the multimedia processor 50 of Fig. 7. Refering to Fig. 8, the multimedia processor displays a selection screen for selecting one of units on the television monitor5. In this embodiment, ten units are provided. Each of the units is composed of a plurality of stages 0 to N (N is an integer). Each of the stages 0 to N consists of combination of left and right path objects, left and right guide objects, and left and right cursors.

Meanwhile, the stages 0 to N are generally referred to as the "stages n". Then, steps S3-0 to S3-N corresponding to the stages 0 to N are generally referred to as the "steps S3-n".

The unit 1 makes the operator perform the training at each hand. Accordingly, in each stage "n" of the unit 1, first, a left-hand training screen which comprises a path object, a guide object and a cursor is displayed, and then a right-hand training screen which comprises a path object, a guide object and a cursor is displayed.

The each unit 2 to 9 makes the operator perform the training with both hands. In each stage "n" of the unit 2, a training screen is displayed, which includes the same path object on left and right sides and the left and right guide objects whose velocities and starting positions are respectively same as each other. The starting position of the guide object is defined as an origin among a plurality of ends of each path object.

In each stage "n" of the unit 3, a training screen is displayed, which includes the same path object on left and right sides and the left and right guide objects whose velocities are same as each other while starting positions are different from each other. In each stage "n" of the unit 4, a training screen is displayed, which includes the same path object on left and right sides and the left and right guide objects whose velocities are different from each other while starting positions are same as each other. In each stage "n" of the unit 5, a training screen is displayed, which includes the same path object on left and right sides and the left and right guide objects whose velocities and starting positions are respectively different from each other.

In each stage "n" of the unit 6, a training screen is displayed, which includes the different path object on left and right sides and the left and right guide objects whose velocities and starting positions are respectively same as each other. In each stage "n" of the unit 7, a training screen is displayed, which includes the different path object on left and right sides and the left and right guide objects whose velocities are same as each other while starting positions are different from each other. In each stage "n" of the unit 8, a training screen is displayed, which includes the different path object on left and right sides and the left and right guide objects whose velocities are different from each other while starting positions are same as each other. In each stage "n" of the unit 9, a training screen is displayed, which includes the different path object on left and right sides and the left and right guide objects whose velocities and starting positions are respectively different from each other.

In each stage "n" of the unit 10, one of the path objects, one of the velocities of the guide objects and one of the starting points of the guide object are selected at random respectively and on the left and the right individually. Specifically, different numbers are preliminarily assigned to each of the path objects, each of the velocities of the guide objects and each of the starting positions of the guide objects. The multimedia processor 50 generates random numbers for the respective path objects, the respective velocities of the guide objects and the respective starting positions of the guide objects on the left and the right individually. Then, the multimedia processor 50 selects the path object, the velocity of the guide object and the starting point of the guide object which are respectively coincident with the corresponding random numbers as generated.

Refering to Fig. 8, the operator operates the cursor 70 by the input instrument 3 to select the desired unit on the selection screen of the television monitor 5. Then, the processing of the multimedia processor 50 proceeds to the next step S3-0. In step S3-0, the multimedia processor 50 displays the training screen for the stage 0 corresponding to the unit selected in step S1 on the television monitor 5 to make the operator perform the training.

In step S3-0, if the multimedia processor 50 determines that the operator has cleared the training of the stage 0, the process proceeds to the next step S3-1. Thereafter, in the same way as above, the process of the multimedia processor 50 proceeds to step S3-(n+1) where the next stage (n+1) is executed every time the stage "n" in the step S3-n is cleared. Then, in step S3-N where the last stage N is executed, if the multimedia processor 50 determines that the operator has cleared the training in stage N, the process proceeds to step S5. In step S5, the multimedia processor 50 displays a unit clear screen (not shown in the figure) which indicates that the operator has cleared the unit selected in step S1 on the television monitor 5 for a fixed time and then the process returns to step S1.

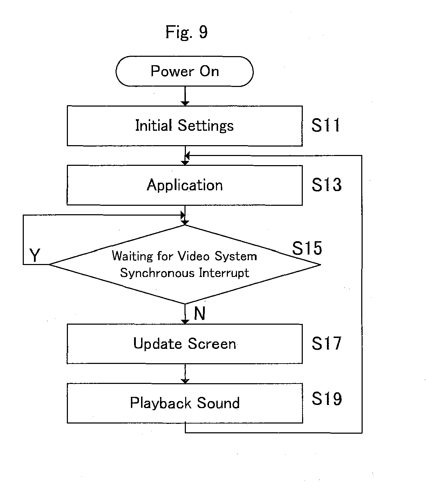

Fig. 9 is a flowchart showing the overall process flow which is executed by the multimedia processor 50 of Fig. 7. Referring to Fig. 9, when a power switch is turned on, in step S11, the multimedia processor 50 performs the initialization process of the system. In step S13, the multimedia processor 50 performs the processing in accordance with an application program stored in the ROM 52. In step S15, the multimedia processor 50 waits until an interrupt based on a video system synchronous signal is generated. In other words, if the interrupt based on the video system synchronous signal is not generated, the processing of the multimedia processor 50 repeats the same step S15. If the interrupt based on the video system synchronous signal is generated, the processing of the multimedia processor 50 proceeds to step S17. For example, the interrupt based on the video system synchronous signal is generated at 1/60 second intervals. In step S17 and step S19, the multimedia processor 50 performs the process of updating the screen displayed on the television monitor 5 and the process of the reproducing sound in synchronism with the interrupt. Then, the process of the multimedia processor 50 returns to step S13

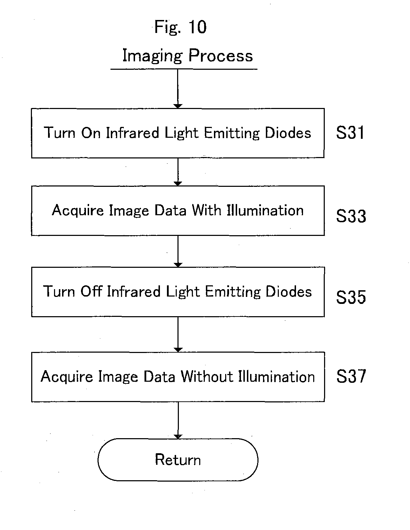

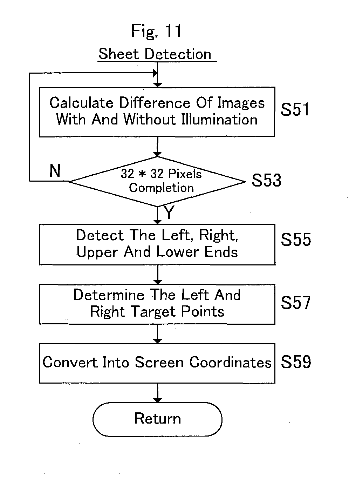

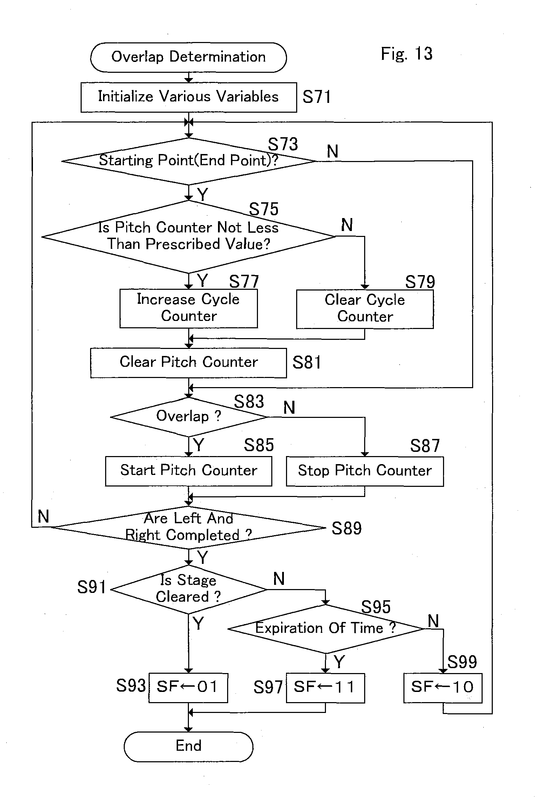

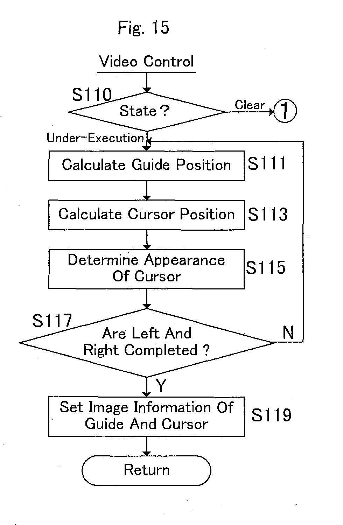

The application program which controls the processing of step 13 includes a plurality of programs. These programs include a program of the imaging process (Fig. 10), a program of the detecting process of the retroreflective sheets (Fig. 11), a program of the video control (Fig. 15) and a pitch counter which is a software counter (Fig. 13). The multimedia processor 50 performs determination with respect to the clear, start and stop of the pitch counter every time the interrupt based on the video system synchronous signal is generated and then performs one of clear, start and stop in accordance with the result of the determination.

Fig. 10 is a flowchart showing the imaging process which is one of the processes of the application program of step S13 of Fig. 9. Referring to Fig. 10, the multimedia processor 50 turns on the infrared light emitting diodes 9 in step S31. In step S33, the multimedia processor 50 acquires, from the image sensor 54, image data which is obtained with infrared light illumination, and stores the image data in the main RAM.

In this case, for example, a CMOS image sensor of 32 pixels x 32 pixels is used as the image sensor 54 of the present embodiment. Accordingly, the image sensor 54 outputs pixel data of 32 pixels x 32 pixels as image data. This pixel data is converted into digital data by the ADC and stored in the main RAM as the elements of two-dimensional array P1 [X] [Y] .

In step S35, the multimedia processor 50 turns off the infrared light emitting diodes 9. In step S37, the multimedia processor 50 acquires, from the image sensor 54, image data (pixel data of 32 pixels x 32 pixels) which is obtained without infrared light illumination, and stores the image data in the main RAM. In this case, the pixel data is stored in the internal main RAM as the elements of two-dimensional array P2 [X] [Y] .

In this way, the multimedia processor 50 performs the stroboscopic imaging. Also, in two-dimensional coordinate system which specifies position of each pixel constituting an image from the image sensor54, it is assumed that the horizontal axis is X-axis and the vertical axis is Y-axis. Since the image sensor 54 of 32 pixels x 32 pixels is used in the case of the present embodiment, X = 0 to 31 and Y = 0 to 31. In this respect, the differential image DI also is applied in the same manner. Meanwhile, the pixel data is a value of brightness.

By the way, the multimedia processor 50 calculates a differential image DI on the basis of the image with infrared light illumination and the image without infrared light illumination obtained by the imaging process in Fig. 10 and extracts target points of the respective retroreflective sheets 15L and 15R captured in the differential image DI. The detail thereof is explained next.

Fig. 11 is a flowchart showing the sheet detecting process which is the other one of the processes of the application program of step S13 of Fig. 9. Referring to Fig. 11, in step S51, the multimedia processor 50 calculates differential data between the pixel data P1 [X] [Y] with infrared light illumination and the pixel data P2 [X] [Y] without infrared light illumination, and the differential data is assigned to the array Dif[X] [Y]. In step S53, the multimedia processor 50 proceeds to step S55 if the differences for 32 x 32 pixels are acquired, otherwise returns to step S51. In this way, the multimedia processor 50 performs repeatedly the processing of step S51 to generate the differential data between the image data with infrared light illumination and the image data without infrared light illumination. As thus described, it is possible to eliminate, as much as possible, noise of light other than the light reflected from the retroreflective sheets 15L and 15R of the input instruments 3L and 3R by calculating the differential image data (differential image DI), and accurately detect the left and right retroreflective sheets 15L and 15R. Meanwhile, in this case, only the differential data exceeding a threshold value may be used as valid data by comparing a fixed threshold value or a variable threshold value with the differential data, and then subsequent processing may be performed. In this case, for example, the differential data which is the threshold value or less is set to "0".

The detecting method of target points of the respective retroreflective sheets 15L and 15R, i.e., the left target point and the right target point will be explained in conjunction with specific examples in advance of explaining step S55 to S59.

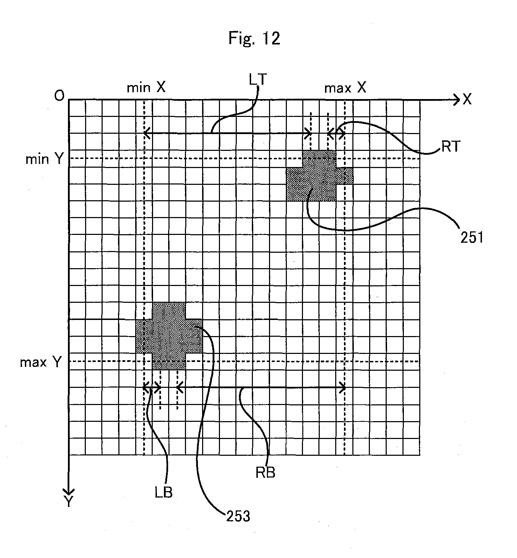

Fig. 12 is an explanatory view for showing the method of extracting a target point of the each retroreflective sheet 15L and 15R from a differential image DI. A differential image of 32 x 32 pixels is illustrated in Fig. 12 on the basis of the differential image data which is generated from the image data obtained when infrared light is emitted and the image data obtained when infrared light is not emitted. In the figure, each of the small unit squares represents one pixel. Also, the origin O of the XY coordinates is located at the upper left vertex.

This image includes two areas 251 and 253 having large luminance values. The areas 251 and 253 represent the retroreflective sheets 15L and 15R. However, at this time, it cannot be determined which area corresponds to which retroreflective sheet.

The multimedia processor 50 first scans the differential image data from X = 0 to X = 31 with Y = 0 as a start point, then Y is incremented followed by scanning the differential image data from X = 0 to X = 31 again. This process is repeated until Y = 31 in order to completely scan the differential image data of 32 x 32 pixels and determine the upper end position minY, the lower end position maxY, the left end position minX and the right end position maxX of the pixel data greater than a threshold value "ThL".

Next, the multimedia processor 50 scans the differential image data in the positive x-axis direction from the coordinates (minX, minY) as a start point, in order to calculate the distance "LT" between the start point and the pixel which first exceeds the threshold value "ThL". Also, the multimedia processor 50 scans the differential image data in the negative x-axis direction from the coordinates (maxX, minY) as a start point, in order to calculate the distance "RT" between the start point and the pixel which first exceeds the threshold value "ThL". Furthermore, the multimedia processor 50 scans the differential image data in the positive x-axis direction from the coordinates (minX, maxY) as a start point, in order to calculate the distance "LB" between the start point and the pixel which first exceeds the threshold value "ThL". Still further, the multimedia processor 50 scans the differential image data in the negative x-axis direction from the coordinates (maxX, maxY) as a start point, in order to calculate the distance "RB" between the start point and the pixel which first exceeds the threshold value "ThL".

If the distances satisfy LT > RT, the multimedia processor 50 sets a target point of the retroreflective sheet 15R, i.e., a right target point to the coordinates (maxX, minY), and if the distances satisfy LT ≤ RT, the multimedia processor 50 sets a target point of the retroreflective sheet 15L, i.e., a left target point to the coordinates (minX, minY). Also, if the distances satisfy LB > RB, the multimedia processor 50 sets a target point of the retroreflective sheet 15R, i.e., a right target point to the coordinates (maxX, maxY), and if the distances satisfy LB ≤ RB, the the multimedia processor 50 sets a target point of the retroreflective sheet 15L, i.e., a left target point to the coordinates (minX, maxY).

Returning to Fig. 11, the multimedia processor 50 performs the process of detecting the left, right, upper and lower ends (minX, maxX, minY, maxY) as explained with reference to Fig. 12 in step S55. In step S57, the multimedia processor 50 performs the process of determining the left target point and the right target point as explained with reference to Fig. 12. In step S59, the multimedia processor 50 converts the coordinates of the left target point and the right target point into the corresponding screen coordinates.

By the way, the multimedia processor 50 performs the process of determining whether or not the cursors 70L and 70R operated by the operator are respectively moved so as to overlap with the guide objects 40L and 40R (overlap determination). Since the cursors 70L and 70R are displayed at the positions of the left target point and right target point respectively, the overlap determination is performed on the basis of those coordinates and the coordinates of the guide objects 40L and 40R. The detail thereof is explained next. While the determination process also is performed as the process of the application program which is executed in step S13 of Fig. 9, for the sake of clarity in explanation, the explanation is made with reference to a flowchart of form included in the transition diagram of Fig. 8 instead of the flowchart of form synchronized with video system synchronous signal.

Fig. 13 is a flowchart showing the overlap determination process which is executed during of the process of the stage "n" of step S3-n of Fig. 8. Referring to Fig. 13, in step S71, the multimedia processor 50 performs the process of the initializing various variables (including flags and software counters).

In step S73, the multimedia processor 50 determines whether or not the guide object 40L is located at the starting point (end point) of the path object of the left area, and if it is located the processing proceeds to step S75, conversely if it is not located the processing proceeds to step S83.

Meanwhile, the starting point of the path object is defined as the starting position of the guide object. In the present embodiment, in the case of the path object which is provided with a closed figure such as the quadrangular path object 28 and so on, one cycle is defined as a process where the guide object goes around it from a prescribed end as the starting point to return to the prescribed end. In this case, the starting point corresponds to the end point.

However, in the case of the path object which is provided with a non-closed figure such as the arc path object 24 and so on, one cycle is defined as M (M is an integer which is one or more) times of reciprocation in accordance with the type of the adjacent path object, i.e., the number of the segments constituting the adjacent path object. For example, in Fig. 4, since the path object 28 of the right area is provided with four segments, one cycle in the path object 24 of the left area is two times of reciprocation. Accordingly, in this case, if a prescribed end of the path object is set to the starting point, the end point is not the prescribed end in first round of reciprocation but prescribed end in second round of reciprocation. In this way, even if the same end, only the end of the last of the cycle can be the end point and the end during the cycle can not be the end point.

Referring to Fig. 13, in step S75, the multimedia processor 50 determines whether or not the value of the pitch counter (for a left hand) is more than or equal to a predetermined value, and if it is more than or equal to the predetermined value the processing proceeds to step S77, conversely if it is not less than the predetermined value processing proceeds to step S79.

As described above, the pitch counter (for a left hand) is a software counter which is increased in synchronism with the video system synchronous signal when the cursor 70L overlaps with the guide object 40L. Then, the predetermined value in step S75 is the value obtained by multiplying 0.9 at the value of the pitch counter corresponding to one cycle of the path object in the left area. Accordingly, the determination of "YES" in step S75 means that the cursor 70L has moved 90% or more of one cycle while overlapping with the guide object 40L at the time when the cursor 70L reaches the end point (success with respect to the cycle). Conversely, the determination of "NO" in step S75 means that the cursor 70L does not move 90% or more of one cycle while overlapping with the guide object 40L at the time when the cursor 70L reaches the end point (failure with respect to the cycle).

As a result, in step S77 after the determination of "YES" in step S75, the multimedia processor 50 increases a cycle counter (for the left hand) by one. Conversely, in step S79 after the determination of "NO" in step S75, the multimedia processor 50 clears the cycle counter (for the left hand). Namely, the cycle counter (for the left hand) indicates how many cycles the successful operations are continuously performed.

In step S81, since the guide object 40L reaches the end point, the multimedia processor 50 clears the pitch counter (for the left hand) . In step S83, the multimedia processor 50 determines whether or not the cursor 70L overlaps with the guide object 40L, and if it overlaps with the guide object 40L the processing proceeds to step S85 and then starts increasing the pitch counter, conversely if it does not overlap with the guide object 40L the processing proceeds to step S87 and then stops increasing the pitch counter. For example, if the center of the cursor 70L is located within a predetermined distance from the center of the guide object 40L, it is determined that it overlaps with the guide object 40L, otherwise, it is determined that it does not overlap with the guide object 40L.

In step S89, the multimedia processor 50 determines whether or not the processing of step S73 to S87 is completed with respect to both left (the left path object, the guide object 40L and the cursor 70L) and right (the right path object, the guide object 40R and the cursor 70R), and if in case of completion the processing proceeds to step S91, conversely if in case of uncompletion, i.e., if the processing with respect to the right is not completed, the processing returns to step S73. In this case, a pitch counter and a cycle counter are prepared for the right.

In step S91, the multimedia processor 50 determines whether or not the stage "n" has been cleared. In this embodiment, it is determined that the stage "n" is cleared if each of the cycle counter (for the left) and the cycle counter (for the right) is more than or equal to a specified value. If the multimedia processor 50 determines that stage "n" has been cleared in step S91 the processing proceeds step S93 in which a state flag SF is set to "01", and then the overlap determination process is finished. The state flag SF is a flag which indicates the state of the stage "n", and the "01" indicates that the stage "n" has been cleared.

After the determination in step S91 is "NO", the multimedia processor 50 determines whether or not a predetermined time elapses from start of stage "n" in step S95, and if it elapses the process proceeds to step S97 in which the stage flag SF is set to "11" which indicates the expiration of time, and then the overlap determination process is finished. If the determination in step S95 is "NO", i.e., the stage "n" is in execution, in step S99, the multimedia processor 50 sets the state flag SF to "10" which indicates that the stage "n" is in execution, and then the processing returns to step S73. Meanwhile, "00" set to the state flag SF is an initial value.

By the way, the multimedia processor 50 controls an image which is displayed on the training screen. The display controls of the path object and the guide object thereof are described below. When these display controls are performed, a path table and a velocity table are referred.

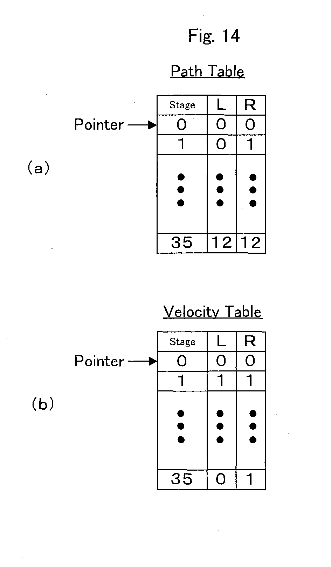

Fig. 14 (a) is a view showing an example of a path table which is referred when displaying the path objects and the guide objects. Referring to Fig. 14(a), the path table is defined as a table showing the relation among the each stage 0 to 35 of one unit, a number assigned to the path object which is displayed on the left area (L) of the screen in the corresponding stage, and a number assigned to the path object which is displayed on the right area (R) of the screen in the corresponding stage.

The same number of the path objects indicates the same path object. The different numbers of the path objects indicate the different path objects. However, even if the path objects are same as each other, the different numbers are assigned each one if the start positions (starting points) of the guide objects are different, and also the different numbers are assigned each one if the moving directions of the guide objects are different.

The multimedia processor 50 reads out a number of the path object to be displayed in the left (L) area and a number of the path object to be displayed in the right (R) area from the path table, which are designated by the path data pointer, and then displays the path objects corresponding to the numbers on the left and right. Since the path data pointer is increased one by one, for this example, one unit is provided with thirty six stages. Such path tables are stored in ROM 52 by the number of the units.

Referring to Fig. 14(b), the velocity table is defined as a table showing the relation among the each stage 0 to 35 of one unit, a number assigned to the guide object which moves on the path object displayed on the left (L) area of the corresponding stage, and a number assigned to the guide object which moves on the path object displayed on the right (R) area of the corresponding stage. For examples, the number "0" indicates an instruction for moving the guide object by one segment of the path object in two beats and the number "1" indicates an instruction for moving the guide object by one segment of the path object in four beats.

The multimedia processor 50 reads out a number of the guide object moving on the path object displayed in the left (L) area and a number of the guide object moving on the path object displayed in the right (R) area from the velocity table, which are designated by the velocity data pointer, and then moves the left and right guide objects in accordance with velocities corresponding to the read out numbers. Since the velocity data pointer is increased one by one, for this example, one unit is provided with thirty six stages. Such velocity tables are stored in ROM 52 by the number of the units.

As described above, the multimedia processor 50 can recognize the path objects and guide objects to be displayed on left and right in the applicable stage of the applicable unit as well as the start positions (start points), the moving velocities, and the moving directions of the guide objects by referring to the path table and the velocity table, and the displays of the path objects and the guide objects are controlled in accordance with these tables.

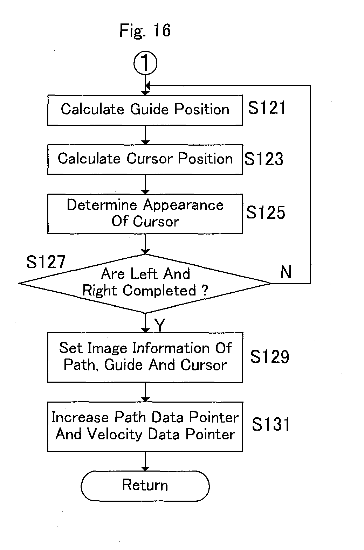

Fig. 15 and Fig. 16 are flowcharts showing the video controlling process which is one of the processes of the application program of step S13 of Fig. 9. Referring to Fig. 15, the multimedia processor 50 determines the state of the stage "n" by referring to the state flag (refer to step S93, S97 and S99 in Fig. 13) in step S110, the process proceeds to step S111 if the state flag indicates the under-execution state, conversely the process proceeds to step S121 in Fig. 16 if the state flag indicates the clear state. Although not shown in the figure, in case that the state flag SF indicates the expiration of time, the process of the multimedia processor 50 proceeds to routine for displaying the relevant image.

In step S111, the multimedia processor 50 calculates the display position of the left-hand guide object 40L by referring to the above path table and velocity table. More specific description is as follows.

The number assigned to the path object in the path table is associated with the length of each segment (or a segment) constituting the path object, and stored in ROM 52. On the other hand, the number assigned to the guide object 40L in the velocity table indicates the velocity of the guide object 40L. As a result, the multimedia processor 50 calculates the movement time of the guide object 40L on a segment on the basis of the length of the segment of the path object and the velocity of the guide object 40L. Then, the multimedia processor 50 sequentially assigns the coordinates GL (x, y) of the guide object 40L such a manner that the guide object 40L moves on the segment in the calculated movement time. Meanwhile, the coordinates GL (x, y) are values of the screen coordinate system.

In step S113, the multimedia processor 50 sets the display position of the cursor 70L to the coordinates TL(x, y) of the left target point corresponding to the left-hand retroreflective sheet 15L. In other method of setting, the display position of the cursor 70L may be set to the midpoints between the coordinates of the previous left target point and the coordinates of the present left target point.

In step S115, the multimedia processor 50 determines the appearance of the cursor 70L in accordance with the display position of the left-hand cursor 70L. More specific description is as follows. Areas are assumed, which are obtained by horizontally dividing a screen into sixteen groups. Then, the images of the cursors 70L are prepared in the ROM 52, which represent the different handprints in each area. Images of the cursors 70L, which represent left palms rotating counterclockwise, are used in the first area to the fourth area from left of the screen, an image of the cursor 70L, which represents a non-rotating left palm, is used in the fifth area from left of the screen, and images of the cursors 70L, which represent left palms rotating clockwise, are used in the sixth area and the subsequent areas from left of the screen.

In step S117, the multimedia processor 50 determines whether or not the processing in steps S111 to S115 is completed with respect to both left and right, and if it is completed the processing proceeds to step S119, conversely if it is not completed, i.e., if the processing is not completed with respect to the right the processing returns to step S111. In this case, in step S115, areas are assumed, which are obtained by horizontally dividing a screen into sixteen groups, and images of the cursors 70R are prepared in the ROM 52, which represent the different handprints in each area. Images of the cursors 70R, which represent right palms rotating clockwise, are used in the first area to the fourth area from right of the screen, an image of the cursor 70R, which represents a non-rotating right palm, is used in the fifth area from right of the screen, and images of the cursors 70R, which represent right palms rotating counterclockwise, are used in the sixth area and the subsequent areas from right of the screen.

In step S119, the multimedia processor 50 writes image information of the guide objects 40L and 40R, and the cursors 70L and 70R (the display positions, image storage locations and so forth) in the relevant areas of the main RAM in accordance with the results of steps S111 to S115. The multimedia processor 50 updates the image in step S17 of Fig. 9 in accordance with the image information as written.

On the other hand, since the stage "n" is cleared in step S121 of Fig. 16, the multimedia processor 50 acquires the number of the path object of the left area from the address designated by the path data pointer and obtains the start position (start point) of the guide object 40L associated with thereof in order to display the training screen of the statge "n+1".

The processes in step S123 and S125 are same as step S113 and S115 of Fig. 15 respectively and therefore redundant explanation is not repeated.

In step S127, the multimedia processor 50 determines whether or not the processing in steps S121 to S125 is completed with respect to both left and right, and if it is completed the processing proceeds to step S129, conversely if it is not completed, i.e., if the processing is not completed with respect to the right the processing returns to step S121.

In step S129, the multimedia processor 50 acquires the numbers of the left and right path objects from the addresses designated by the path data pointer and writes image information thereof (display positions, image storage locations and so forth) in the relevant locations in the main RAM. In addition, the multimedia processor 50 writes image information of the guide objects 40L and 40R, and the cursors 70L and 70R (the display positions, image storage locations and so forth) in the relevant areas of the main RAM in accordance with the results of steps S121 to S125. The multimedia processor 50 updates the image in step S17 of Fig. 9 in accordance with the image information as written.

In step S131, the multimedia processor 50 increases the path data pointer of the path table and the velocity data pointer of the velocity table by one respectively.

Meanwhile, in present embodiment, since the guide object moves by one segment in two beats or four beats, the multimedia processor 50 playbacks the music in synchronism with it.

By the way, in the case of the present embodiment as has been discussed above, each guide object moves to the direction specified independently to each guide object on the path object assigned independently to each of the left and right hands, and the instruction of moving in accordance with them is given to the operator. Therefore a series of the processing and transmission of information in the order of eyes, a visual nerve, a brain, a motor nerve, and hands and arms are performed inside of a human body, which are not performed in normal life, by making the operator perform the independent motions of the respective left and right hands, which are not performed in normal life. As the result, the contribution to improvement of dexterity performance of human is anticipated. In addition, when the movement instructed by the information which is recognized through the visual nerve is performed by the left and right hands through the motor nerve, the contribution to improvement of exactness and speediness of the transmission of the instruction is anticipated.

In other words, it is anticipated that the training system of the present embodiment can contribute to improvement of a coordination ability of human. The coordination ability is defined as an ability to smoothly perform processes of a series of movements where a human detects situation using the five senses, determines it using a brain, and moves muscle specifically. Accordingly, the training system (the training apparatus) of the present invention may be referred as the coordination training system (the coordination training apparatus).

More specifically, the coordination ability includes a rhythm ability, a balance ability, a switch-over ability, a reaction ability, a coupling ability, an orientation ability, and a differentiation ability. The rhythm ability means an ability to represent rhythm of the movement based on visual information, acoustic information, and /or information imaged by a person with a body. The balance ability means an ability to maintain the proper balance and recover the deformed posture. The switch-over ability means an ability to quickly switch over movement in response to the change of condition. The reaction ability means an ability to quickly react to a signal to deal appropriately. The coupling ability means an ability to smoothly move an entire body, i.e., an ability to adjust a force and a speed to laconically move a muscle and a joint of the partial body. The orientation ability means an ability to comprehend a positional relation between the moving object and one's own body. The differentiation ability means an ability to link hands and/or feet and/or instruments with a visual input to precisely operate them (the hand-eye coordinaton (coordination between hand and eye), the foot-eye coordinaton (coordination between foot and eye)). Especially, it is expected that the present embodiment can contribute to improvement of the differentiation ability (the hand-eye coordination).

The above mentioned training screens (Fig. 4 and so on) are cited as exercises of training the coordination ability. Otherwise, for examples, the exercises of training the coordination ability can be make by reflecting the bilaterality which is defined as well-balanced usage of left and right hands and feet, the differentiation which is defined as a movement which is not performed in a normal life, the compositeness is defined as combination of a plurality of movements, the irregularity is defined as an off-center movement, the variation of difficulty, and/or variation of conditions and so on.

Also, since the respective guide objects move in accordance with music, the operator can move in accordance with the music and thereby the operator is supported to move in accordance with movement instructions by the guide objects.

Furthermore, the difficulty of movements instructed by the guide objects can be raised by using the different path objects between left and right. The difficulty of movements instructed by the guide objects can be more raised by moving the left and right guide objects corresponding to the left and right path objects clockwise and counterclockwise respectively if the different left and right path objects loop. On the other hand, the difficulty of instructed movements can be reduced in comparison with the case where the guide objects moves to the different directions by moving the left and right guide objects corresponding to the left and right path objects to the same direction which is any one of clockwise and counterclockwise if the different left and right path objects loop. The difficulty of movements instructed by the guide objects can be further more raised by moving the left and right guide objects corresponding to the different left and right path objects with the different velocities each other.

Also, the difficulty of the instructed movements can be reduced in comparison with the case where the left and right path objects are different from each other by usage of the same left and right path objects. The difficulty of movements instructed by the guide objects can be more raised by moving the left and right guide objects corresponding to the left and right path objects clockwise and counterclockwise respectively if the same left and right path objects loop. On the other hand, the difficulty of instructed movements can be reduced in comparison with the case where the guide objects move to the different directions by moving the left and right guide objects corresponding to the left and right path objects to the same direction which is any one of clockwise and counterclockwise if the same left and right path objects loop. The difficulty of movements instructed by the guide objects can be further more raised by moving the left and right guide objects corresponding to the same left and right path objects with the different velocities each other.

In addition, each of the path objects is provided with the single segment or the plurality of the segments. As a result, the various processes (e.g., movement control of the guide object, display control of the assistant object, and so on) can be performed as a unit the segment. The assistant object is displayed at an end of a segment in timing when the guide object reaches the end of the segment and thereby the operator is supported to move in accordance with a movement instruction by the guide object by viewing the assistant object.

Further, if the operator clears the training screen, the training screen which is different from it is displayed. As a result, since various movement instructions are given, the contribution to improvement of dexterity performance of a human and the contribution to improvement of exactness and speediness of the transmission of an instruction in the case where the relevant part of the body performs through a motor nerve the motion instructed by the information which is recognized through a sensory nerve are more anticipated.

Furthermore, It is determined whether or not the cursor moves in accordance with the corresponding guide object, then the character of "good" is displayed, and thereby the operator can objectively recognize whether or not he or she has performed the motion in accordance with the guide object.

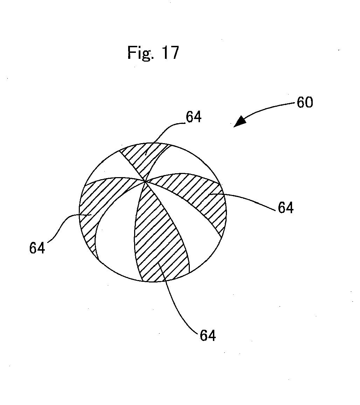

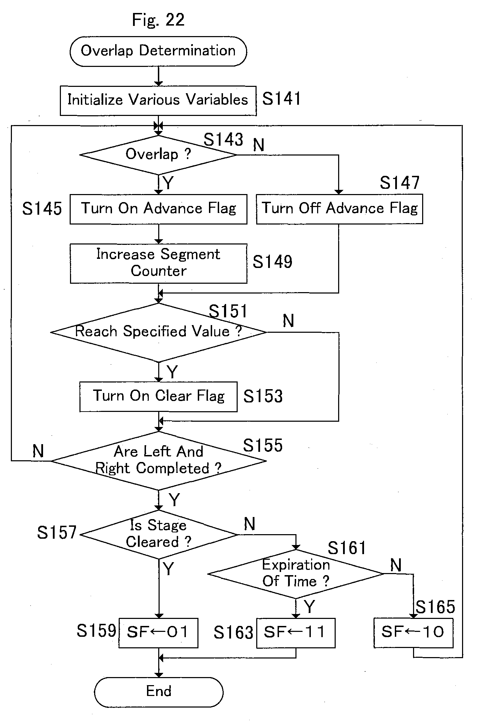

Meanwhile, the present invention is not limited to the above embodiments, and a variety of variations and modifications may be effected without departing from the spirit and scope thereof, as described in the following exemplary modifications.
(1) The transparent member 17 can be semi-transparent or colored-transparent.
(2) It is possible to attach the retroreflective sheet 15 to the surface of the transparent member 17. In this case, the transparent member 17 need not be transparent.
(3) While middle finger is inserted through the input instrument 3 in the structure as described above, the finger(s) to be inserted and the number of the finger(s) are not limited thereto.
(4) A shape of an input instrument is not limited to the shape of the above input instrument 3. For example, as shown in Fig. 17, a spherical input instrument 60 may be used. The retroreflective sheets 64 are attached to surface of the input instrument 60. The operator holds the input instruments 60 with the respective left and right hands to perform the motion in accordance to the training screen.
   Also, a weight of prescribed weight can be incorporated in the input instrument 60 in order that the operator can move the hands in the loading state. In this case, since it is exercise for the operator to move the hands in accordance with the training screen, it can contribute to the promotion of health in addition to the above effects.
(5) The shape of the path object is not limited to the above mentioned one, and an arbitrary shape may be used. The combination thereof is arbitrary. However, a so-called traversable or unicursal figure (including a non-closed figure) is preferred.
(6) The velocities of the left and right guide objects may be different from each other. The velocity of the guide object may arbitrarily fluctuate, or acceleration may be applied thereto.
(7) The music and/or assistant object are not necessarily absolute. Also, the path object can not be displayed. Further, the cursor can not be displayed. For an extreme example, the training screen can be is configured of only the guide objects.
(8) A light-emitting device such as an infrared diode may be attached to the input instrument 3 and 60 instead of attaching the reflection member such as the retroreflective sheet 15 and 64. In this case, it is not necessary for the information processing apparatus 1 to attach the infrared diodes 9. Also, an imaging device such as an image sensor and CCD captures an image of a subject to analyze the image without an input instrument, and thereby the motion may be detected.
   Further, an imaging device such as an image sensor and so on may be installed in an input instrument and a reflection member such as the a retroreflective sheet (s) (one, two, or more) may be attached to a display device (e.g., slightly outside of a screen) such as a television monitor 5. In this case, after obtaining which position on a screen the input instrument indicates on the basis of the image of the reflection member captured by the imaging device, the cursor is displayed at the indicated position and thus the cursor can be operated. Meanwhile, the position on the screen indicated by the input instrument may be obtained by a computer such as MCU installed in the input instrument, or by the information processing apparatus 1 on the basis of the captured image transmitted to the information processing apparatus 1. In this case, the infrared diode for stroboscopic imaging is installed in the input instrument. Also, a light-emitting device such as an infrared diode may be attached to the display device instead of attaching the reflection member to the display device (e.g., two infrared diodes are placed on the upper surface of the display device at a predetermined interval). In this case, it is not necessary for the input instrument to attach the infrared diodes for stroboscopic imaging.
   Further, the number of the input instruments corresponding to the number of the cursors such as two mice and two trackball can be used as the two input instruments for operating the cursors 70L and 70R. At all events, the type of the input instrument is not limited if the respective cursors 70L and 70R can be operated individually. Furthermore, the respective cursors 70L and 70R can be operated by two input instruments each of which includes an acceleration sensor (e.g., three axes), a gyroscope (e.g., three axes), a tilt sensor, a magnetic sensor, a vibration sensor or arbitrary combination thereof.
(9) In aforementioned explanation, while the examples of the path objects is explained referring to Fig. 5, the shape of the path object is not limited to them. For example, a path object, which instructs the motion so as to trace a shape such as a character and numeral or the motion so as to draw a picture, may be used.

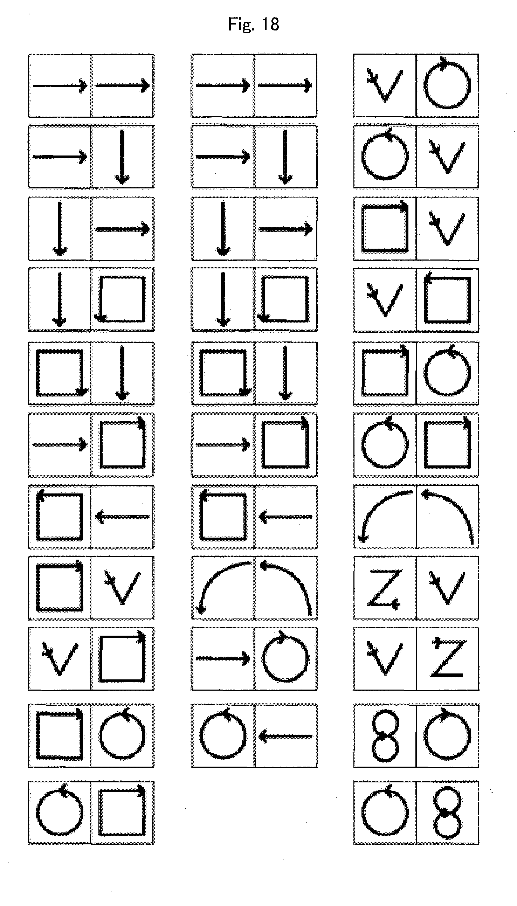

   Fig. 18 is a view showing other examples of training screens on the basis of the training system of Fig. 1. In Fig. 18, a left area of each training screen indicates a path object for the left hand and a right area thereof indicates a path object for the right hand. Then, a head of an arrow designates a starting point of a guide object and a direction thereof designates a moving direction of the guide object.
(10) As described above, while the operator attaches the input instrument 3 in such a manner that the retroreflective sheet 15 is arranged on a palm side and then operates the input instrument 15 while opening the hand to direct the palm at the image sensor 54, the way of wearing and operating the input instrument 3 are not limited to them.

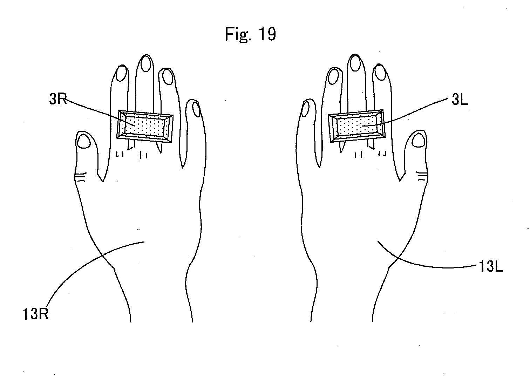

   Fig. 19 is a view showing the other example of the way of wearing the input instruments 3 of Fig. 1. As shown in Fig.19, the operator may wear the input instrument 3 in such a manner that the retroreflective sheet 15 is arranged on back of the hand and then operate the input instrument 3 while opening the hand to direct the back of the hand at the image sensor 54. Meanwhile, in this case, the operator may or may not have the image sensor 54 capture an image of the retroreflective sheet 15 by the action of directing the palm side or the back side of a hand at the image sensor 54, i.e., the action of turning back the palm or returning it in order to perform the control of the input/no-input states detectable by the information processing apparatus 1.
   In this case, the operator moves independently the respective left and right hands while directing the back sides of the hands at the front side, which does not perform in the normal life, and thereby a series of the processing and transmission of information in the order of the eyes, the visual nerve, the brain, the motor nerve, and the hands and arms are performed inside of a human body, which are not performed in a normal life. Therefore, it is expected that the effect of training the brain and nerves of the operator is more improved.

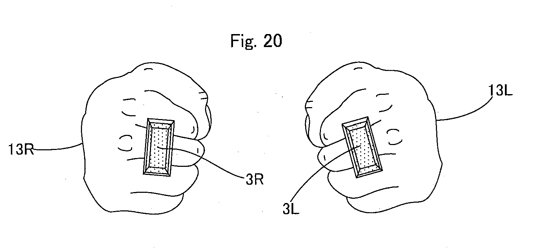

   Fig. 20 is a view showing the further other example of the way of wearing the input instruments 3 of Fig. 1. As shown in Fig.20, the operator may wear the input instrument 3 in such a manner that the retroreflective sheet 15 is arranged on back of the finger and then operate the input instrument 3 while making a tight fist to direct the back of the hand and the fist at the image sensor 54. Meanwhile, in this case, the operator may or may not have the image sensor 54 capture an image of the retroreflective sheet 15 by the action of bending the wrist or returning it in order to perform the control of the input/no-input states detectable by the information processing apparatus 1.
   Also, in case that the image sensor 54 and the multimedia processor 50 have relatively high performance and capability of determining the distance of the retroreflective sheet 15 to the image sensor 54 by size of the captured image of the retroreflective sheet 15, "ON" can be set if the area of the image is more than or equal to a predetermined threshold value and "OFF" can be set if the area of the image is less than the predetermined threshold value. As a result, the operator may move the retroreflective sheet 15 closer to the image sensor 54 or move it away from the image sensor 54 by the action of pushing the fist or returning it in order to perform the control of the input/no-input states detectable by the information processing apparatus 1.
   In this case, since the operator moves the wrist or arm each time performing the control of the input/no-input states, it is expected that the wrist or the muscular strength of the arm of the operator is improved.
   In the case the training system of the present invention, as shown in Fig. 19 and Fig. 20, since the operator can perform the different types of the motions only by changing the way of the wearing and operating the input instrument 3, even if the efficacy of the training is reduced by reason why one operation way of the input instrument 3 is continuously performed for a prescribed term and thereby the nerve system of the operator orients oneself to the movement guided by the training system, the motion of the operator guided by the training system changes by changing of the way of the wearing and operating the input instrument 3 and thereby the novel incentive is given to the nerve system. As a result, the operator can perform sustainably the training while using the same apparatus.
(11) A guide object may start moving when the relevant cursor overlaps with the guide object instead of constantly moving the guide object. In what follows, an explanation is specifically made in conjunction with the accompanying drawings.

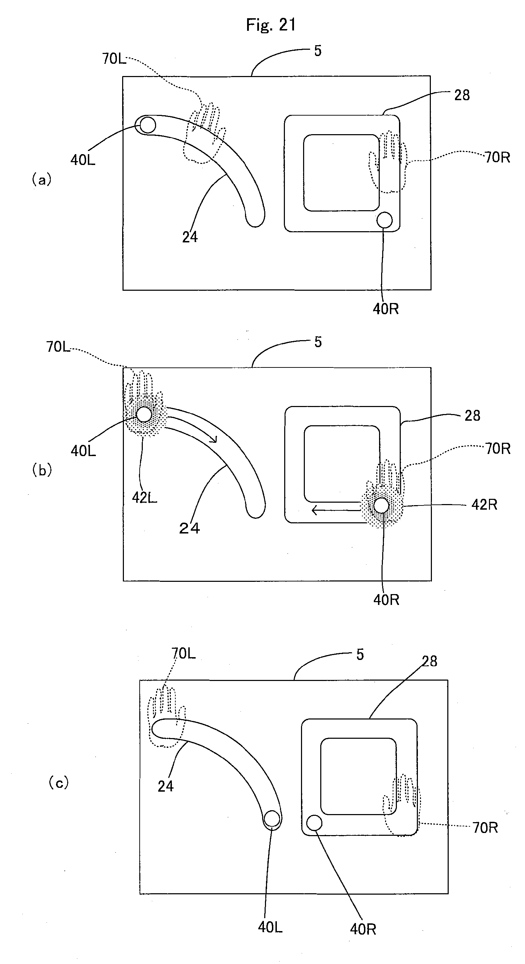

   Fig. 21(a) to 21(c) are views showing the modification examples of the moving way of the guide objects on the basis of the training system of Fig. 1. Referring to these drawings, similarly to the training screen in Fig. 4, the multimedia processor 50 displays a training screen which includes the path object 24, the path object 28, the cursors 70L and 70R, and the guide objects 40L and 40R on the television monitor 5.
   Fig. 21 (a) shows the state of the training screen at a time of start. The multimedia processor 50 displays the guide object 40L at the upper end of the path object 24 and the guide object 40R at lower right corner of the path object 28 at the time of the start.
   Fig. 21(b) shows the state at a time when the cursors 70L and 70R overlap with the guide objects 40L and 40R respectively by moving the hands from the state in Fig. 21 (a) . At this time, the multimedia processor 50 displays assistant objects 42L and 42R on the guide objects 40L and 40R respectively and outputs sound from a speaker (not shown in the figure). Then, the multimedia processor 50 moves the guide objects 40L and 40R to the directions of arrows by one segment.
   Fig. 21 (c) shows the state where the multimedia processor 50 moves the guide objects 40L and 40R at the lower end of the path object 24 and at the lower left corner of the path object 28 from the states as shown in Fig. 21(b) respectively. The operator moves the hands again to try to overlap the cursors 70L and 70R with the guide objects 40L and 40R respectively.
   In this way, since the operator can overlap respectively the cursors 70L and 70R with the guide objects 40L and 40R which stop at the destinations instead of overlapping the cursors 70L and 70R with the guide objects 40L and 40R which move sustainably, the degree of the difficulty can be lowered while maintaining the purpose of operating the respective left and right hands independently and thereby it is possible to provide the training system easy to be accepted by the operator such as the old people, child and so on which are unused to the operation
   Fig. 22 is a flowchart showing the overlap determining process which is executed in the modification example. This flow is executed in processing for the stage "n" in the step S3-n of Fig. 8 instead of the flow of Fig. 13. Referring to Fig. 22, in step S141, the multimedia processor 50 performs the process of the initializing various variables (including flags and software counters).
   In step S143, the multimedia processor 50 determines whether or not the cursor 70L overlaps with the guide object 40L, and if it overlaps with the guide object 40L the processing proceeds to step S145, conversely if it does not overlap with the guide object 40L the processing proceeds to step S147. In step S145, the multimedia processor 50 turns an advance flag on and then the processing proceeds step S149. The advance flag indicates whether or not the guide object 40L should be advanced, and the guide object 40L is advanced from the end of the segment where it locates currently to the next end if it is ON.
   Then, in step S149, the multimedia processor 50 increases a segment counter which is a software counter by one. Since this segment counter is increased every time the advance flag changes from OFF to ON, the segment counter indicates how many segments the guide object 40L moves.
   On the other hand, in step S147, since the cursor 70L does not overlap with the guide object 40L, the advance flag is turned off and the processing proceeds to step S151.
   In step S151, the multimedia processor 50 determines whether or not the value of the segment counter reaches a specified value. This specified value is set in accordance with the necessary number "C" of the cycles for completing one stage "n". The value of the segment counter at the time when "C" cycles are completed is set as the specified value. If the multimedia processor 50 determines that the value of the segment counter reaches the specified value in step S151, the clear flag is turned off in step S153 and then the processing proceeds to step S155, conversely if it does not reach the processing proceeds to step S155 with doing nothing.
   In step S155, the multimedia processor 50 determines whether or not the processing of step S143 to S153 is completed with respect to both left and right, and if in case of completion the processing proceeds to step S157, conversely if in case of uncompletion, i.e., if the processing with respect to the right is not completed, the processing returns to step S143. In this case, a segment counter, an advance flag, and a clear flag are prepared for the right.
   In step S157, the multimedia processor 50 determines whether or not the stage "n" is cleared. In this embodiment, it is determined that the stage "n" is cleared if the respective the segment counter (for left) and the segment counter (for right) are more than or equal to the specified value. If the multimedia processor 50 determines that stage "n" is cleared in step S157 the processing proceeds to step S159 in which a state flag SF is set to "01", and then the overlap determination process is finished. The meaning of the stage flag is the same as the case in Fig. 13.
   After determining "NO" in step S157, the multimedia processor 50 determines whether or not a predetermined time elapses from start of stage "n" in step S161, and if it elapses the process proceeds to step S163 in which the stage flag SF is set to "11" and then the overlap determination process is finished. After determining "NO" in step S161, i.e., if the stage "n" is in execution, in step S165, the multimedia processor 50 sets the state flag SF to "10" and then the processing returns to step S143.
(12) The directions of hands which the operator directs at the image sensor 54 may are reflected on the directions of the cursors 70L and 70R (the step S115 in Fig. 15 and so on). For example, directions of the cursors 70L and 70R may be corresponded to supposed directions of the operator's hands in accordance with positions of the cursors 70L and 70R on the training screen by supposing the directions of the operator's hands in advance in the case where cursors 70L and 70R are located at relevant positions. Also, the multimedia processor 50 may analyze directions of the hands captured by the image sensor 54 and display the cursors 70L and 70R which have the appearances based on the result of the analysis. In this way, the operator can further feels a sense of unity between the motions of his or her hands and the motions of the cursors 70L and 70R.
(13) The shapes of the cursors 70L and 70R are not limited to the above mentioned shapes. For example, their shapes may be round shapes (circle shapes).
(14) For example, the above training system is applied for the training for improving a motor nerve childhood, the rehabilitation, the training for an athlete or wannabe, the training for musician or wannabe, and so on.
(15) The degree of the difficulty of the path object is explained below. It is assumed that the degree of difficulty of a path object for simple reciprocation such as a straight line and an arc (e.g., the unclosed path object is provided with one segment) is the first difficulty level. It is assumed that the degree of difficulty of a path object where lengths of the respective sides constituting one figure are equal to one another such as a "V" configuration, a square, and an equilateral triangle, i.e., the velocity of the guide object is common on each side (e.g., the path object is provided with a plurality of the segments whose lengths are equal to one another) is the second difficulty level. It is assumed that the degree of difficulty of a path object where a plurality of the sides constituting one figure include the side (s) of the different length such as a rectangle, and a "Z" and an "N" configurations, i.e., the velocity of the guide object is different on each side (e.g., the path object is provided with a plurality of the segments which include the segment of the different length) is the third difficulty level. It is assumed that the degree of difficulty of a path object which includes a curved line such as an "8" configuration and a circle (e.g., the path object includes the curved segment) is the fourth difficulty level. In this case, the fourth difficulty level, the third difficulty level, the second difficulty level, and the first difficulty level are in the decreasing order of the degrees of difficulty of operations.

While the present invention has been described in terms of embodiments, it is apparent to those skilled in the art that the invention is not limited to the embodiments as described in the present specification. The present invention can be practiced with modification and alteration within the spirit and scope which are defined by the appended claims.

## Claims

1. A training method comprising the steps of:
displaying a plurality of paths which is individually assigned to respective parts of a human body, a plurality of guide objects which corresponds to said plurality of paths, and a plurality of cursors which corresponds to the respective parts of the human body;
moving said respective guide object along said corresponding paths in directions which are individually assigned to said respective guide objects;
capturing images of the parts of the human body;
detecting motions of the respective parts of the human body on the basis of the images acquired by capturing; and
moving said cursors in response to the detected motions of the corresponding parts of the human body.

2. The training method as claimed in claim 1 wherein, in said step of moving along said paths, said each guide object moves in synchronism with music.

3. The training method as claimed in claim 1 wherein said plurality of paths includes two different paths at least.

4. The training method as claimed in claim 3 wherein each of said two different paths loops and said two guide objects corresponding to said two paths move clockwise and counterclockwise respectively.

5. The training method as claimed in claim 3 wherein each of said two different paths loops and said two guide objects corresponding to said two paths move in the same direction which is any one of clockwise and counterclockwise.

6. The training method as claimed in any one of claims 3 to 5 wherein said two guide objects corresponding to said two different paths move at different speeds each other.

7. The training method as claimed in claim 1 wherein said plurality of paths includes the two same paths at least.

8. The training method as claimed in claim 7 wherein each of said two same paths loops and said two guide objects corresponding to said two paths move clockwise and counterclockwise respectively.

9. The training method as claimed in claim 7 wherein each of said two same paths loops and said two guide objects corresponding to said two paths move in the same direction which is any one of clockwise and counterclockwise.

10. The training method as claimed in any one of claims 7 to 9 wherein said two guide objects corresponding to said two same paths move at different speeds each other.

11. The training method as claimed in claim 1 wherein each of said paths is provided with a single segment or a plurality of segments.

12. The training method as claimed in claim 11 further comprising:
displaying an assistant object at an end of said segment in timing when said guide object reaches the end of said segment.

13. The training method as claimed in any one of claims 1 to 12 further comprising:
changing a moving direction of said guide object and/or said path thereof.

14. The training method as claimed in any one of claims 1 to 13 further comprising:
determining whether or not said cursor moves along a movement of said corresponding guide object.

15. The training method as claimed in any one of claims 1 to 14 wherein, in said step of capturing, retroreflective members are captured, which are worn or grasped in the respective parts of the human body, wherein
said training method further comprises:
emitting light intermittently to said retroreflective members which are worn or grasped in the respective parts.

16. The training method as claimed in any one of claims 1 to 14 wherein, in said step of capturing, light-emitting devices are captured, which are worn or grasped in the respective parts of the human body.

17. The training method as claimed in any one of claims 1 to 16 wherein the parts of the human body are both hands.

18. A training method comprising the steps of:
displaying a plurality of guide objects which corresponds to a plurality of parts of a human body and a plurality of cursors which corresponds to the plurality of parts of the human body;
moving said respective guide object in accordance with paths which are individually assigned to said respective guide objects;
detecting motions of the respective parts of the human body; and
moving said cursors in response to the detected motions of the corresponding parts of the human body.

19. A training method comprising:
issuing movement instructions which are individually assigned to respective parts of a human body via a display device, wherein
the each movement instruction for the each part of the human body includes a content which instructs in realtime so as to move simultaneously and sustainably the each part of the human body.

20. A training apparatus comprising:
a plurality of input instruments which correspond to a plurality of part of a human body;
a display control unit operable to display a plurality of paths which is individually assigned to the respective parts of the human body, a plurality of guide objects which corresponds to said plurality of paths, and a plurality of cursors which corresponds to the respective parts of the human body;
a first movement control unit operable to move said respective guide object along said corresponding paths in directions which are individually assigned to said respective guide objects;
an imaging unit operable to capture images of the plurality of input instruments which are worn or grasped in the plurality of parts of the human body;
a detection unit operable to detect motions of the plurality of input instruments on the basis of the images acquired by capturing; and
a second movement control unit operable to move said cursors in response to the detected motions of the corresponding input instruments.

21. The training apparatus as claimed in claim 20 wherein said input instrument includes a weight of predetermined weight in order that the human can move the part of the human body in loaded condition.

22. The training method as claimed in claim 1 wherein, in said step of moving along said paths, when said cursor overlaps with said corresponding guide object, said guide object starts moving.

23. A coordination training method comprising the steps of:
outputting a predetermined subject as an image to a display device and/or as voice to an audio output device;
capturing images of a plurality of parts of a human body;
detecting motions of the respective parts of the human body on the basis of the images acquired by capturing; and
performing evaluation on the basis of detected results of the respective parts of the human body and said predetermined subject, wherein
said predetermined subject includes a subject for training an arbitrary combination or any one of an orientation ability, a switch-over ability, a rhythm ability, a reaction ability, a balance ability, a coupling ability, and a differentiation ability of a human by cooperation with the each part of the human body.

24. The coordination training method as claimed in claim 23 further comprising:
displaying a plurality of cursors which corresponds to the respective parts of the human body.
